# EUROPEAN PATENT APPLICATION

(11) **EP 3 145 182 A1**
(43) Date of publication of application: **22.03.2017**
(21) Application number: 14891688.5
(22) Date of filing: 16.05.2014
(51) Int. Cl.: H04N 7/18, B60R 1/00, G08G 1/16

(54) **MONITOR DEVICE AND COMPUTER PROGRAM FOR DISPLAY IMAGE SWITCHING**

(71) Applicant: Fujitsu Limited, Kawasaki-shi, Kanagawa 211-8588 (JP)
(72) Inventor: HAYASHI, Taketoshi, Kawasaki-shi Kanagawa 211-8588 (JP); HIYAMA, Yoshitaka, Kawasaki-shi Kanagawa 211-8588 (JP)
(74) Representative: Fenlon, Christine Lesley
(86) International application number: PCT/JP2014/063110
(87) International publication number: WO 2015/173961

(57) **Abstract**

A monitor device includes: a switching determination unit that switches a display mode to be applied from a first display mode to a second display mode different form the first display mode, when a speed of a vehicle reaches a first threshold or higher during the first display mode being applied, while switching the display mode to be applied from the second display mode to the first display mode, when a speed of the vehicle reaches a second threshold or lower during the second display mode being applied, the second threshold being lower than the first threshold, and switches the display mode to be applied back to the first display mode, when an average speed of the vehicle in a first period after switching from the first display mode to the second display mode is lower than the first threshold; and a display control unit that causes a display device to display an image of an area around the vehicle, the image being generated in accordance with the display mode to be applied of the first display mode and the second display mode.

## Description

### [TECHNICAL FIELD]

The present invention relates to a monitor device to be mounted, for example, on a vehicle and a computer program for display image switching to be applied to such a monitor device.

### [BACKGROUND ART]

In order to reduce a driver's blind spot of a vehicle and assist a driver in driving, research has been conducted on a system for capturing an area around a vehicle by a camera and displaying an image of the area on a display installed toward the driver.

In such a system, it is effective to display an image of a wide area covering from the side to the rear of the vehicle in order to reduce the driver's blind spot. However, a rapid change of image contents during traveling at high speed may annoy the driver which may decline the driver's attentiveness. In view of this problem, it is proposed to switch an image to be displayed corresponding to the traveling speed of a vehicle (refer to Patent Literatures 1 and 2, for example).

For example, Patent Literature 1 discloses a navigation system configured to cause a display to display a wide-angle image generated by a wide-angle camera for capturing a rear and side of a vehicle. This navigation system causes the display to display a lower portion of a wide-angle image when the speed is 60 km/h or lower, to display a side portion of a wide-angle image when the speed is 80 km/h or higher, and to display a wide-angle image when the speed is higher than 60 km/h and lower than 80 km/h.

Patent Literature 2 discloses an image generation device configured to generate an image to be displayed by a display device mounted on a vehicle. When the traveling speed of a vehicle is lower than a predetermined threshold, the image generation device causes the display device to display an image of a synthetic image, which is generated by using an image of a front area of the vehicle and multiple images captured by multiple cameras, and an image of the vehicle included therein. In contrast, when the traveling speed of the vehicle is higher than the predetermined threshold, the image generation device causes the display device to display a different image. In addition, Patent Literature 2 indicates that a different threshold to determine switching a display mode may be used depending on whether the speed is increasing or decreasing.

### [Citation List]

### [Patent Literature]

[Patent Literature 1] Japanese Unexamined Patent Publication (Kokai) No. 2006-331164
[Patent Literature 2] Japanese Unexamined Patent Publication (Kokai) No. 2013-38794

### [SUMMARY OF THE INVENTION]

### [Problem to be Solved by the Invention]

Using a different threshold for switching an image to be displayed depending on whether the speed is increasing or decreasing can suppress frequent switching of an image when a vehicle is traveling at a speed close to the threshold. However, a vehicle speed may temporarily become faster or slower than the speed intended by the driver, due to a factor related to driver's operation, such as an accelerator stepping amount or a brake stepping amount, or an environmental factor, such as ups and downs of a road or a traffic congestion state. During such a transitional speed fluctuation, sometimes the vehicle speed may instantaneously exceed a threshold for switching an image display. In such a case, an image different from what is supposed to be displayed may be continuously displayed even after the speed fluctuation.

For example, it is assumed that the threshold of the speed for switching from a display image at low-speed traveling to a display image at high-speed traveling is 70 km/h when the speed is increasing, and the threshold of the speed for switching from a display image at high-speed traveling to a display image at low-speed traveling is 50 km/h. In such a case, assume that a vehicle speed instantaneously exceeds 70 km/h when an image at low-speed traveling is displayed, and immediately thereafter the vehicle speed decreases to 60 km/h. In this case, an image to be displayed at the moment when the vehicle speed exceeds 70 km/h is switched from a display image at low-speed traveling to a display image at high-speed traveling. However, since the vehicle speed does not decrease to reach a threshold lower than that at low-speed traveling, the image at high-speed traveling remains displayed although the vehicle is not traveling at a high speed.

In view of this problem, the present description is intended to provide a monitor device capable of suppressing an image display from being maintained in a switched state due to a transitional speed change.

### [Means for Solving the Problem]

A monitor device is provided according to an embodiment. The monitor device includes: a switching determination unit that switches a display mode to be applied from a first display mode to a second display mode different from the first display mode, when a vehicle speed reaches a first threshold or higher during the first display mode being applied, that switches the display mode to be applied from the second display mode to the first display mode, when the vehicle speed reaches a second threshold or lower during the second display mode being applied, the second threshold being lower than the first threshold, and that switches the display mode to be applied back to the first display mode when an average value of the vehicle speed during a first period after switching from the first display mode to the second display mode is lower than the first threshold; and a display control unit that causes a display device to display an image representing an area around the vehicle, the image being generated in accordance with the display mode to be applied of the first display mode and the second display mode.

A monitor device is provided according to another embodiment. The monitor device includes: a switching determination unit that switches a display mode to be applied from a first display mode to a second display mode different from the first display mode, when an average value of a vehicle speed in a most recent first period reaches a first threshold or higher during the first display mode being applied, and that switches the display mode to be applied from the second display mode to the first display mode, when an average value of the vehicle speed in a most recent second period, which is shorter than the first period reaches a second threshold or lower during the second display mode being applied; and a display control unit that causes a display device to display an image representing an area around the vehicle, the image being generated in accordance with the display mode of the first display mode and the second display mode to be applied.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### [EFFECT OF THE INVENTION]

The monitor device disclosed in the present description is capable of suppressing an image display from being maintained in a switched state due to a transitional speed change.

### [BRIEF DESCRIPTION OF DRAWINGS]

FIG. 1 is a block diagram illustrating a monitor device according to an embodiment.
FIG. 2 is a partially enlarged view of a vehicle for illustrating arrangement of a camera and a mirror.
FIG. 3 is a block diagram illustrating a controller.
FIG. 4 is a functional block diagram of a control unit of the controller.
FIG. 5A is a diagram illustrating an example of an image displayed in a low-speed traveling mode.
FIG. 5B is a diagram illustrating an example of an image displayed in a high-speed traveling mode.
FIG. 6 is a diagram illustrating an example of a relationship between a change in a vehicle speed and a threshold for an image switching.
FIG. 7 is an operation flowchart of display image switching process.
FIG. 8 is an operation flowchart of display image switching process according to a modified example.

### [MODE FOR CARRYING OUT THE INVENTION]

A monitor device will be described below with reference to the drawings. The monitor device displays an image obtained by capturing from the side to the rear side of the vehicle on a display installed in a vehicle interior. The monitor device includes a low-speed traveling mode (first display mode) and a high-speed traveling mode (second display mode) as a display mode. The monitor device applies the high-speed traveling mode for high-speed traveling, and causes a display to display an image representing a range narrower than an image displayed in the low-speed traveling mode applied for low-speed traveling. In addition, the monitor device causes a threshold for switching the display mode to be different depending on whether the speed is increasing or decreasing, and, when the display mode is switched due to a change in speed in excess of the threshold and the average speed in a certain period does not reach the threshold, the switched display mode is switched back to the original mode.

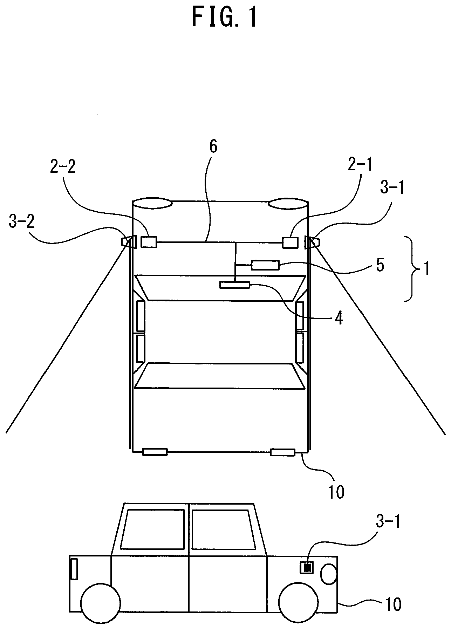

FIG. 1 is a block diagram illustrating the monitor device according to an embodiment.

A monitor device 1 is mounted on a vehicle 10 and includes two cameras 2-1 and 2-2, two mirrors 3-1 and 3-2, a display 4, and a controller 5. The cameras 2-1 and 2-2, the display 4, and the controller 5 are connected to one another via a control area network 6 (hereinafter referred to as CAN). Note that in FIG. 1, the components of the monitor device 1, and the shape, size, and arrangement of the vehicle 10 are different from the actual things for convenience of explanation.

In the embodiment, the monitor device 1 is used instead of, or together with, a fender mirror or a door mirror. The monitor device 1 captures an area from the right side to the rear of the vehicle 10 by the camera 2-1, which is arranged near a right side face of the vehicle via the mirror 3-1. Similarly, the monitor device 1 captures an area from the left side to the rear of the vehicle 10 by the camera 2-2, which is arranged near a left side face of the vehicle 10 via the mirror 3-2. The monitor device 1 displays an image generated by the camera 2-1 and an image generated by the camera 2-2, on the display 4 installed in a vehicle interior via the controller 5.

Each of the cameras 2-1 and 2-2 is an example of an imaging unit and is arranged so that an optical axis OA of the camera directs toward the outside of the vehicle 10 and to generate an image that represents a subject in an imaging range. Therefore, each of the cameras 2-1 and 2-2 includes: a two-dimensional detector configured by an array of a photoelectric conversion element with sensitivity to visible light, such as CCDs or C-MOSs; and an imaging optical system which forms an image of an area around the vehicle 10 on the two-dimensional detector. The imaging optical system of each of the cameras 2-1 and 2-2 may be, for example, a wide-angle lens with a view angle of 80° or wider so as to be able to capture a wide area from the side to the rear of the vehicle 10.

Each of the cameras 2-1 and 2-2 captures an area from the side to the rear of the vehicle 10 at certain time intervals (for example, every 1/30 second) and generates an image of the area. Each of the cameras 2-1 and 2-2 sequentially transmits the generated image to the controller 5 via the CAN 6.

The mirror 3-1 is arranged at a position which overlaps with an imaging range of the camera 2-1 outside the vehicle 10 and reflects a light from a predetermined direction toward the camera 2-1. Similarly, the mirror 3-2 is arranged at a position which overlaps with an imaging range of the camera 2-2 outside the vehicle 10 and reflects a light from a predetermined direction toward the camera 2-2.

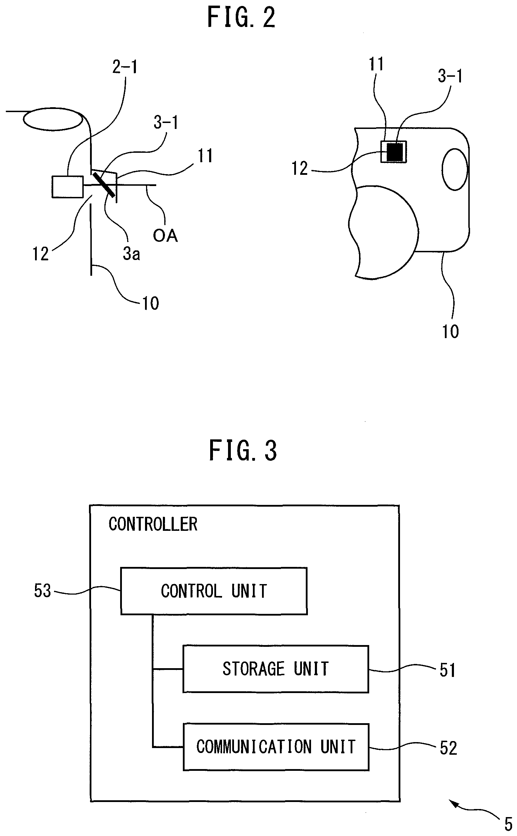

FIG. 2 is a partially enlarged view of the vehicle 10 for illustrating arrangement of the camera 2-1 and the mirror 3-1. It is preferable that the camera 2-1 and the mirror 3-1 are arranged in front of the driver's seat in the vehicle 10 in order to reduce a blind spot of a driver. Therefore, in the embodiment, the camera 2-1 is arranged in front of the driver's seat inside the vehicle 10, near the right side face in an engine room, for example. The camera 2-1 is fastened, by using a screw, to a supporting stand (not depicted) provided inside the vehicle 10, for example.

In the embodiment, the camera 2-1 is arranged toward the outside of the vehicle 10 so that the optical axis OA of the camera 2-1 is orthogonal to a travelling direction of the vehicle 10. Note that the optical axis OA does not need to be orthogonal to the traveling direction of the vehicle 10, and the camera 2-1 may be arranged so that the angle between the optical axis OA and the traveling direction of the vehicle 10 is 30°, 45°, or 60°, for example.

The mirror 3-1 is arranged inside a cover member 11 provided outside the right side face of the vehicle 10 so that a reflection surface 3a of the mirror 3-1 overlaps with an imaging range of the camera 2-1. A window for camera 12 is formed on the side face of the body of the vehicle 10 between the mirror 3-1 and the camera 2-1 so that a light flux reflected by the mirror 3-1 toward the camera 2-1 is not to be blocked out by the body. Note that in order to protect the camera 2-1 from being exposed to raindrops and dust, a transparent member (not depicted) made of glass or transparent resin may be provided to the window 12. The cover member 11 is formed so as to cover the mirror 3-1 other than the reflection surface 3a, for example.

Note that in the embodiment, the camera 2-1 and mirror 3-1, and the camera 2-2 and mirror 3-2 are arranged so as to be in linear symmetry to a line that passes the center of the vehicle 10 and that is parallel to the traveling direction of the vehicle 10. Therefore, what is obtained by switching the right and left sides of the arrangement of the camera 2-1 and the mirror 3-1 is the arrangement of the camera 2-2 and the mirror 3-2.

Note that according to a modified example, the cameras 2-1 and 2-2 may be arranged inside the right and left cover members 11 toward the rear of the vehicle 10. The cameras 2-1 and 2-2 may directly shoot an area from the side to the rear of the vehicle 10, respectively. In this case, the mirrors 3-1 and 3-2 may be omitted.

The display 4 is an example of a display device and may be, for example, a liquid crystal display or an organic EL display. The display 4 is arranged inside the vehicle 10 so that the display screen is directed toward a driver. For example, the display 4 is arranged in an instrument panel. Alternatively, the display 4 may be arranged independently of the instrument panel. The display 4 is controlled by the controller 5 to display an image received from the controller 5.

In the embodiment, an image generated on the basis of an image obtained by the camera 2-1 is displayed on the right half of the display 4, and an image generated on the basis of an image obtained by the camera 2-2 is displayed on the left half of the display 4. Alternatively, the monitor device 1 may include two displays as the display 4. In this case, an image generated on the basis of an image obtained by the camera 2-1 is displayed on the display arranged on the right hand side of the driver, for example. An image generated on the basis of an image obtained by the camera 2-2 is displayed on the display arranged on the left hand side of the driver.

The controller 5 controls each unit of the monitor device 1. The controller 5 also generates a display image to be displayed on the display 4, on the basis of the images received from the cameras 2-1 and 2-2 and outputs the display image to the display 4.

FIG. 3 is a block diagram of the controller. The controller 5 includes a storage unit 51, a communication unit 52, and a control unit 53. The storage unit 51 includes a semiconductor memory, such as a nonvolatile memory or a volatile memory, that is electrically rewritable. The storage unit 51 stores various programs for controlling the monitor device 1 and data to be used in the various programs, such as thresholds to be utilized for switching a display mode.

The communication unit 52 includes a communication interface for communicating with the camera 2-1, the camera 2-2, the display 4, a vehicle control unit (not depicted), a vehicle speed sensor (not depicted) and the like, via the CAN 6, and a control circuit therefor.

The control unit 53 includes one or more processors and a peripheral circuit thereof and executes a process such as control of each unit of the monitor device 1 and generation of a display image.

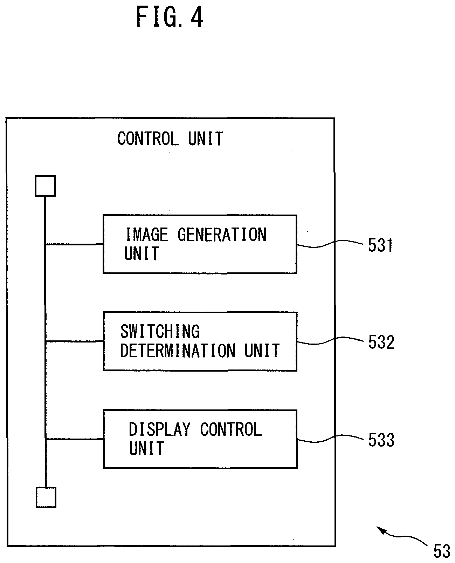

FIG. 4 is a functional block diagram of the control unit 53. As illustrated in FIG. 4, the control unit 53 includes an image generation unit 531, a switching determination unit 532, and a display control unit 533. These units included in the control unit 53 are implemented as function modules to be realized by a computer program executed on a processor included in the control unit 53, for example. Alternatively, these units included in the control unit 53 may be implemented as firmware. Alternatively, these units included in the control unit 53 may be implemented as dedicated circuits.

Every time the controller 5 receives images from the cameras 2-1 and 2-2, the image generation unit 531 generates a display image to be displayed on the display 4 from the received images.

In the embodiment, the image generation unit 531 generates a display image in a low-speed traveling mode while the vehicle 10 is traveling at a low speed, and generates a display image in a high-speed traveling mode while the vehicle 10 is traveling at a high speed.

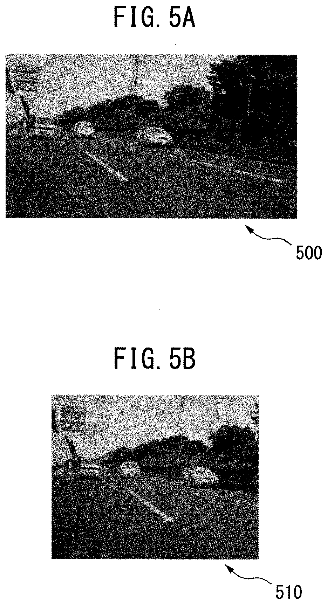

FIG. 5A is a diagram illustrating an example of a display image in the low-speed traveling mode. In contrast, FIG. 5B is a diagram illustrating an example of a display image in the high-speed traveling mode. A display image 500 in the low-speed traveling mode may be, for example, an image itself generated by the cameras 2-1 or 2-2. In contrast, a display image 510 in the high-speed traveling mode is an image which represents an area close to the vehicle 10 trimmed from the display image 500 in the low-speed traveling mode. In other words, the area represented on the display image 510 in the high-speed traveling mode is smaller than the area represented on the display image 500 in the low-speed traveling mode. For example, the horizontal view angle of a display image in the high-speed traveling mode is narrower than the horizontal view angle of a display image in the low-speed traveling mode by approximately 5° to 30°. Hereby, decline of the driver's attentiveness at high-speed traveling is suppressed. In contrast, the driver can check presence or absence of danger in a wider area in low-speed traveling.

The image generation unit 531 may perform image processing, such as a luminance adjustment or a white balance adjustment, on the display image.

Every time a display image is generated, the image generation unit 531 stores the generated display image in the storage unit 51.

The switching determination unit 532 determines whether to switch the display mode to be applied, on the basis of a change in vehicle speed of the vehicle 10. The switching determination unit 532 receives the vehicle speed for every constant period (for example, every 0.1 to one second) from a vehicle speed sensor (not depicted) attached to the vehicle 10 or an electronic control unit (not depicted). The switching determination unit 532 compares the vehicle speed with a threshold for display mode switching determination.

In the embodiment, a first threshold and a second threshold are used as thresholds for display mode switching determination. The first threshold is used to determine whether to switch from the low-speed traveling mode to the high-speed traveling mode when the vehicle speed is increasing, and is set at 70 km/h, for example. In contrast, the second threshold is used to determine whether to switch from the high-speed traveling mode to the low-speed traveling mode when the vehicle speed is decreasing, and is set at a speed lower than the first threshold, at 50 km/h, for example. When the vehicle speed is increased to a speed higher than or equal to the first threshold while the low-speed traveling mode is applied, the switching determination unit 532 switches the display mode to be applied from the low-speed traveling mode to the high-speed traveling mode. Then, the switching determination unit 532 notifies the image generation unit 531 and the display control unit 533 of applying the high-speed traveling mode. When the vehicle speed is decreased to a speed lower than or equal to the second threshold while the high-speed traveling mode is applied, the switching determination unit 532 switches the display mode to be applied from the high-speed traveling mode to the low-speed traveling mode. Then, the switching determination unit 532 notifies the image generation unit 531 and the display control unit 533 of applying the low-speed traveling mode.

Hereby, even when the vehicle 10 is traveling at a speed close to the threshold, it is possible to prevent frequent switching of an image to be displayed between a wide-angle display image for low-speed traveling and a narrow-angle display image for high-speed traveling, due to a slight change in speed.

In addition, in the embodiment, the switching determination unit 532 suppresses that a display mode to be applied is maintained in a switched state due to a transitional speed fluctuation due to a factor related to driver's operation or an environmental factor. In order to do this, when the display mode to be applied is switched, the switching determination unit 532 calculates the average value of the vehicle speed in a certain period thereafter. When the average value of the vehicle speed has not reached the threshold, the switching determination unit 532 switches the display mode to be applied back to the original mode. In other words, when the vehicle speed increases to a speed higher than or equal to the first threshold and the display mode to be applied is switched from the low-speed traveling mode to the high-speed traveling mode, the switching determination unit 532 calculates the average value of the vehicle speed in a certain period thereafter. When the average value of the vehicle speed is lower than the first threshold, the switching determination unit 532 switches the display mode to be applied back to the low-speed traveling mode. Similarly, when the vehicle speed decreases to a speed lower than or equal to the second threshold and the display mode to be applied is switched from the high-speed traveling mode to the low-speed traveling mode, the switching determination unit 532 calculates the average value of the vehicle speed in a certain period thereafter. When the average value of the vehicle speed is higher than the second threshold, the switching determination unit 532 switches the display mode to be applied back to the high-speed traveling mode. Note that a certain period is set at five seconds, for example. The switching determination unit 532 starts clocking of a period for calculating the average value of the vehicle speed, at the time when the vehicle speed that is measured immediately after the display mode is switched is input to the controller 5, for example. Alternatively, the switching determination unit 532 may start clocking of a period for calculating the average value of the vehicle speed, after an offset time is passed since the display mode is switched. In this case, the offset time is set at one to three seconds, for example. Note that after a certain period is passed since the display mode is switched after the vehicle speed reaches one of the thresholds, the switching determination unit 532 does not switch the display mode until the vehicle speed reaches the other threshold.

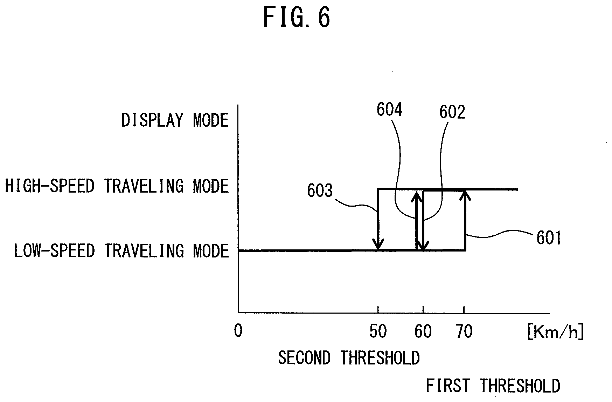

FIG. 6 is a diagram illustrating an example of a relationship between a change in a vehicle speed and a threshold for an image switching. In FIG. 6, the horizontal axis represents speed, and the vertical axis indicates a type of a display mode to be applied. As indicated by an arrow 601, when the vehicle 10 accelerates while the low-speed traveling mode is being applied, and the vehicle speed reaches the first threshold, the display mode to be applied is switched from the low-speed traveling mode to the high-speed traveling mode.

As indicated by an arrow 602, when the average speed in a certain period thereafter is lower than the first threshold, the switching determination unit 532 switches the display mode to be applied back to the low-speed traveling mode even when the average value is higher than the second threshold.

As indicated by an arrow 603, when the vehicle 10 decelerates while the high-speed traveling mode is being applied, and the vehicle speed decreases to the second threshold or lower, the display mode to be applied is switched from the high-speed traveling mode to the low-speed traveling mode. In this case also, as indicated by an arrow 604, when the average speed in a certain period thereafter is higher than the second threshold, the switching determination unit 532 switches the display mode to be applied back to the high-speed traveling mode even when the average value is lower than the first threshold.

Note that the switching determination unit 532 may change a length of a period for obtaining the average value of the vehicle speed to determine whether to switch the display mode back to the original mode depending on whether the vehicle speed is increasing or decreasing. For example, it is preferable that the period (for example, three seconds) for calculating the average value of the vehicle speed for determining whether to switch the display mode back to the low-speed traveling mode is shorter than the period (for example, five seconds) for calculating the average value of the vehicle speed for determining whether to switch the display mode back to the high-speed traveling mode. This is because it is preferable to switch the display mode back to the original low-speed traveling mode at an earlier timing when traveling at low-speed in comparison with when traveling at high-speed, due to a state of requiring relatively more attention because of a road being narrow or the distance to a vehicle traveling ahead being short.

When it is determined to switch the display mode back to the original mode on the basis of the average value in a certain period after temporarily switching the display mode, the switching determination unit 532 notifies the image generation unit 531 and the display control unit 533 of applying the original display mode.

Once notified by the switching determination unit 532 that the low-speed traveling mode is applied, the display control unit 533 reads a display image in the low-speed traveling mode from the storage unit 51 and outputs the read display image to the display 4 until notified of switching to the high-speed traveling mode. In contrast, once notified by the switching determination unit 532 that the high-speed traveling mode is applied, the display control unit 533 reads a display image in the high-speed traveling mode from the storage unit 51 and outputs the read display image to the display 4 until notified of switching to the low-speed traveling mode.

In the embodiment, the display control unit 533 generates a synthetic image including a display image that is generated on the basis of an image obtained by the camera 2-1 and represents an area from the right side to the rear of the vehicle and that is displayed on the right half of the display, and a display image that is generated on the basis of an image obtained by the camera 2-2 and represents an area from the left side to the rear of the vehicle and that is displayed on the left half of the display. The display control unit 533 outputs the synthetic image to the display 4.

When the display 4 includes two displays, the display control unit 533 may output a display image generated on the basis of an image generated by the camera 2-1 to one of the displays, and may output a display image generated on the basis of an image generated by the camera 2-2 to the other display.

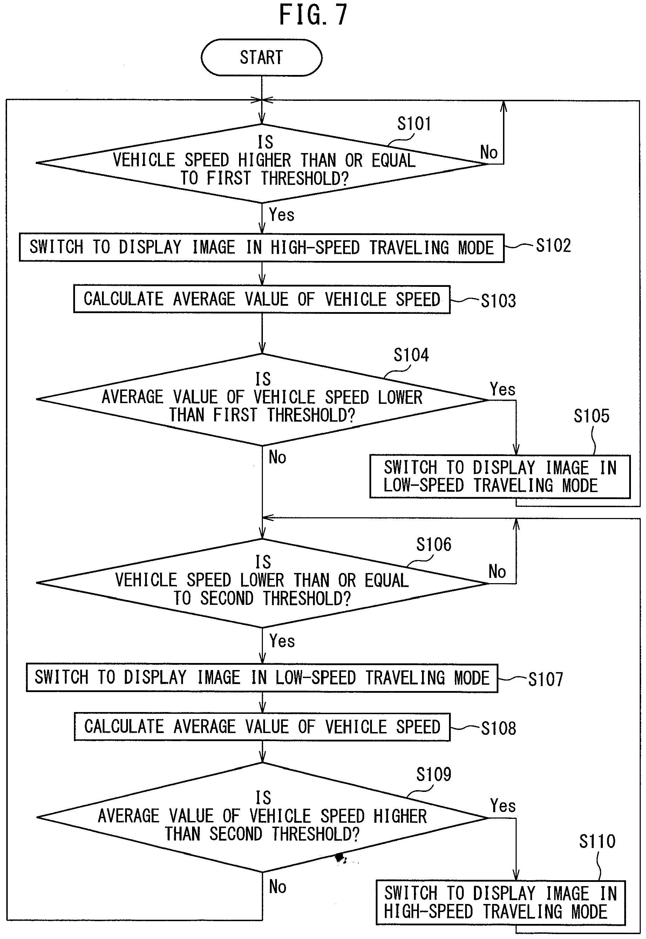

FIG. 7 is an operation flowchart in display image switching process executed by the control unit 53.

When the low-speed traveling mode is applied, the switching determination unit 532 determines whether the vehicle speed is increased to a speed higher than or equal to the first threshold (Step S101). When the vehicle speed is lower than the first threshold (No in Step S101), the control unit 53 repeats the process in Step S101. In contrast, when the vehicle speed is higher than or equal to the first threshold (Yes in Step S101), the switching determination unit 532 notifies the image generation unit 531 and the display control unit 533 of switching the display mode to be applied from the low-speed traveling mode to the high-speed traveling mode. Thereafter, the display control unit 533 causes the display 4 to display a display image at high-speed traveling in accordance with the high-speed traveling mode (Step S102). Then, the switching determination unit 532 calculates the average value of the vehicle speed acquired in a certain period (Step S103). The switching determination unit 532 determines whether the average value of the vehicle speed is lower than the first threshold (Step S104). When the average value of the vehicle speed is lower than the first threshold (Yes in Step S104), the switching determination unit 532 determines to switch the display mode to be applied back to the low-speed traveling mode and notifies the image generation unit 531 and the display control unit 533 of the determination. Thereafter, the display control unit 533 causes the display 4 to display a display image at low-speed traveling in accordance with the low-speed traveling mode (Step S105). Then, the control unit 53 repeats the processes in Step S101 and the steps subsequent thereto.

In contrast, when the average value of the vehicle speed is higher than or equal to the first threshold (No in Step S104), the switching determination unit 532 maintains the applying of the high-speed traveling mode. When the high-speed traveling mode is applied, the switching determination unit 532 determines whether the vehicle speed has decreased to the second threshold or lower (Step S106). When the vehicle speed is higher than the second threshold (No in Step S106), the control unit 53 repeats the process in Step S106. In contrast, when the vehicle speed is lower than or equal to the second threshold (Yes in Step S106), the switching determination unit 532 notifies the image generation unit 531 and the display control unit 533 of switching the display mode to be applied from the high-speed traveling mode to the low-speed traveling mode. Thereafter, the display control unit 533 causes the display 4 to display a display image at the low-speed traveling in accordance with the low-speed traveling mode (Step S107). Then, the switching determination unit 532 calculates the average value of the vehicle speed acquired in a certain period (Step S108). The switching determination unit 532 determines whether the average value of the vehicle speed is higher than the second threshold (Step S109). When the average value of the vehicle speed is higher than the second threshold (Yes in Step S109), the switching determination unit 532 determines to switch the display mode to be applied back to the high-speed traveling mode and notifies the image generation unit 531 and the display control unit 533 of the determination. Then, the display control unit 533 causes the display 4 to display a display image at the high-speed traveling in accordance with the high-speed traveling mode (Step S110). Thereafter, the control unit 53 repeats the processes in Step S106 and the steps subsequent thereto.

In contrast, when the average value of the vehicle speed is lower than or equal to the second threshold (No in Step S109), the switching determination unit 532 maintains the applying of the low-speed traveling mode. Thereafter, the control unit 53 repeats the processes in Step S101 and the steps subsequent thereto.

As described above, the monitor device changes a display mode to be applied at the high-speed traveling or the low-speed traveling, and causes the display to display an image in accordance with the display mode. Then, the monitor device changes a threshold used for switching determination of a display mode to be applied, depending on whether the speed is increasing or decreasing. Further, when the average speed in a certain period after switching the display mode to be applied due to the speed, that has reached one threshold once, does not reach the threshold, the monitor device switches the display mode to be applied back to the original mode. Therefore, the monitor device is capable of suppressing the display mode from being maintained in a switched state, when the vehicle speed only exceeds the threshold for switching the display mode temporarily due to a transitional speed change.

According to a modified example, when the high-speed traveling mode is applied, the control unit 53 does not need to determine whether to switch the display mode to be applied back to the high-speed traveling mode, on the basis of the average value of the vehicle speed in a certain period after switching to the low-speed traveling mode due to a decrease of the vehicle speed to the second threshold or lower. In this case, although a display image in the low-speed traveling mode may be displayed on the display 4 in the case where a display image in the high-speed traveling mode is to be displayed on the display 4, this is due to a wider range to be displayed in the low-speed traveling mode.

According to another modified example, every time a vehicle speed is received from the vehicle speed sensor or the electronic control unit via the communication unit 52, the control unit 53 stores the vehicle speed in the storage unit 51. The control unit 53 may determine whether to switch the display mode to be applied, on the basis of a comparison result of the average value of the vehicle speed in a certain period with the threshold for determining whether to switch the display mode. In this example, the switching determination unit 532 calculates the average value of the vehicle speed in a most recent certain period (for example, five seconds). When the low-speed traveling mode is applied as a display mode, the switching determination unit 532 switches the display mode to be applied from the low-speed traveling mode to the high-speed traveling mode when the average value reaches the first threshold or higher. After the switching, the display control unit 533 causes the display 4 to display a display image in the high-speed traveling mode. In contrast, when the high-speed traveling mode is applied in the display 4, the switching determination unit 532 determines to switch the display mode to be applied from the high-speed traveling mode to the low-speed traveling mode when the average value of the vehicle speed reaches the second threshold or lower. After the switching, the display control unit 533 causes the display 4 to display a display image in the low-speed traveling mode.

In this modified example, the switching determination unit 532 may change a length of a period for obtaining the average value of the vehicle speed depending on whether the vehicle speed is increasing or decreasing. For example, it is preferable that the period (for example, three seconds) for obtaining the average value of the vehicle speed when the vehicle speed is decreasing (i.e., the high-speed traveling mode is applied) is shorter than the period (for example, five seconds) for obtaining the average value of the vehicle speed when the vehicle speed is increasing (i.e., the low-speed traveling mode is applied). This is because, when a driver reduces the vehicle speed, the vehicle is in a relatively dangerous state, for example, the road being narrow or the distance to the vehicle ahead being short, it is preferable that the time needed to switch an image to be displayed on the display 4 is shorter than when the vehicle speed is increasing.

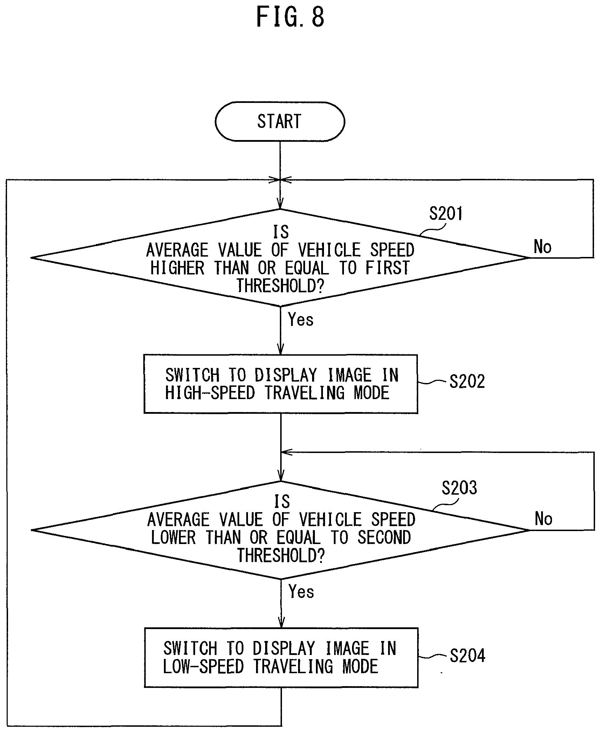

FIG. 8 is an operation flowchart of display image switching process performed by the control unit 53, according to a modified example.

When the low-speed traveling mode is applied, the switching determination unit 532 calculates the average value of the vehicle speed in a most recent certain period, and determines whether the average value of the vehicle speed has increased to the first threshold or higher (Step S201). When the average value of the vehicle speed is lower than the first threshold (No in Step S201), the control unit 53 repeats the process in Step S201. In contrast, when the average value of the vehicle speed is higher than or equal to the first threshold (Yes in Step S201), the switching determination unit 532 notifies the image generation unit 531 and the display control unit 533 that the display mode to be applied is switched from the low-speed traveling mode to the high-speed traveling mode. Then, the display control unit 533 causes the display 4 to display a display image at the high-speed traveling in accordance with the high-speed traveling mode (Step S202).

When the high-speed traveling mode is applied, the switching determination unit 532 calculates the average value of the vehicle speed in a most recent certain period, and determines whether the average value of the vehicle speed has decreased to the second threshold or lower (Step S203). When the average value of the vehicle speed is higher than the second threshold (No in Step S203), the control unit 53 repeats the process in Step S203. In contrast, when the average value of the vehicle speed is lower than or equal to the second threshold (Yes in Step S203), the switching determination unit 532 notifies the image generation unit 531 and the display control unit 533 that the display mode to be applied is switched from the high-speed traveling mode to the low-speed traveling mode. Thereafter, the display control unit 533 causes the display 4 to display a display image at the low-speed traveling in accordance with the low-speed traveling mode (Step S204). Then, the control unit 53 repeats the processes in Step S201 and the steps subsequent thereto.

According to this modified example, the monitor device determines whether to switch the display mode on the basis of the average value of the vehicle speed. Therefore, when the vehicle speed instantaneously exceeds a threshold due to a transitional speed change, the monitor device can suppress temporary switching of the display mode.

According to another modified example, every time images are received from the cameras 2-1 and 2-2, the image generation unit 531 may generate both a display image at high-speed traveling and a display image at low-speed traveling on the basis of the images and may cause the storage unit 51 to store the display images. The display control unit 533 may read either the display image at high-speed traveling or the display image at low-speed traveling from the storage unit 51 in accordance with the display mode to be applied, and cause the display 4 to display the display image.

According to still another modified example, a camera for acquiring a display image at high-speed traveling may be different from a camera for acquiring a display image at low-speed traveling. In addition, an area to be captured by the camera for acquiring a display image at high-speed traveling may be different from an area to be captured by the camera for acquiring a display image at low-speed traveling.

All examples and specific terms cited herein are intended with a teaching purpose for assisting the reader in understanding the invention and the concept contributed by the inventor to furthering the art, and are to be construed as being without limitation to a configuration of any example of the description and such a specifically cited example and condition related to showing the superiority and inferiority of the invention. Although the embodiment of the present inventions has been described in detail, it is to be understood that the various modifications, substitutions, and alterations could be added hereto without departing from the spirit and scope of the invention.

### [DESCRIPTION OF REFERENCE NUMERALS]

- 1: monitor device
- 2-1, 2-2: camera
- 3-1, 3-2: mirror
- 3a: reflection surface
- 4: display
- 5: controller
- 51: storage unit
- 52: communication unit
- 53: control unit
- 531: image generation unit
- 532: switching determination unit
- 533: display control unit
- 6: CAN
- 10: vehicle
- 11: cover member
- 12: window

## Claims

1. A monitor device comprising:
a switching determination unit that switches a display mode to be applied from a first display mode to a second display mode different from the first display mode, when a speed of a vehicle reaches a first threshold or higher during the first display mode being applied, while switching the display mode to be applied from the second display mode to the first display mode, when a speed of the vehicle reaches a second threshold or lower during the second display mode being applied, the second threshold being lower than the first threshold, and switches the display mode to be applied back to the first display mode, when an average speed of the vehicle in a first period after switching from the first display mode to the second display mode is lower than the first threshold; and
a display control unit that causes a display device to display an image of an area around the vehicle, the image being generated in accordance with the display mode to be applied of the first display mode and the second display mode.

2. The monitor device according to claim 1, wherein the switching determination unit switches the display mode to be applied back to the second display mode, when an average speed of the vehicle in a second period after switching from the second display mode to the first display mode is higher than the second threshold.

3. The monitor device according to claim 2, wherein the first period is shorter than the second period.

4. The monitor device according to any one of claims 1 to 3, wherein the display control unit sets an area represented on an image to be displayed by the display device in the first display mode to be larger than an area represented on an image to be displayed by the display device in the second display mode.

5. A monitor device comprising:
a switching determination unit that switches a display mode to be applied from a first display mode to a second display mode different from the first display mode, when an average speed of a vehicle in an immediate first period reaches a first threshold or higher during the first display mode being applied, while switching the display mode to be applied from the second display mode to the first display mode, when an average speed of the vehicle in an immediate second period reaches a second threshold or lower, the second threshold being lower than the first threshold, during the second display mode being applied, the second period being shorter than the first period; and
a display control unit that causes a display device to display an image of an area around the vehicle, the image being generated in accordance with the display mode to be applied of the first display mode and the second display mode.

6. A computer program for display image switching for causing a computer to execute:
switching a display mode to be applied from a first display mode to a second display mode different from the first display mode, when a speed of a vehicle reaches a first threshold or higher during the first display mode being applied, while switching the display mode to be applied from the second display mode to the first display mode, when a speed of the vehicle reaches a second threshold or lower during the second display mode being applied, the second threshold being lower than the first threshold;
switching the display mode to be applied back to the first display mode, when an average speed of the vehicle in a first period after switching from the first display mode to the second display mode is lower than the first threshold; and
causing a display device to display an image of an area around the vehicle, the image being generated in accordance with the display mode to be applied of the first display mode and the second display mode.

7. A computer program for display image switching for causing a computer to execute:
switching a display mode to be applied from a first display mode to a second display mode different from the first display mode, when an average speed of a vehicle in an immediate first period reaches a first threshold or higher during the first display mode being applied, while switching the display mode to be applied from the second display mode to the first display mode, when an average speed of the vehicle in an immediate second period reaches a second threshold or lower, the second threshold being lower than the first threshold, during the second display mode being applied, the second period being shorter than the first period; and
causing a display device to display an image of an area around the vehicle, the image being generated in accordance with the display mode to be applied of the first display mode and the second display mode.
